# EUROPEAN PATENT APPLICATION

(11) **EP 4 670 797 A1**
(43) Date of publication of application: **31.12.2025**
(21) Application number: 24184806.8
(22) Date of filing: 26.06.2024
(51) Int. Cl.: A62B 7/14, A62B 9/02, G05D 16/06, G05D 16/10

(54) **AIRCRAFT OXYGEN SUPPLY SYSTEM, AND AIRCRAFT COMPRISING SUCH AN AIRCRAFT OXYGEN SUPPLY SYSTEM**

(71) Applicant: B/E Aerospace Systems GmbH, 23560 Lübeck (DE)
(72) Inventor: GOEKE, Ralf, 23566 Lübeck (DE); KRISSUN, Jens, 23566 Lübeck (DE); KRISHNASAMY, Venkateswaran, 560067 Bengalore (IN)
(74) Representative: Schmitt-Nilson Schraud Waibel Wohlfrom Patentanwälte Partnerschaft mbB

(57) **Abstract**

An aircraft oxygen supply system (2) comprises at least one oxygen mask (12), an oxygen supply (20), and a pressure reducer (26), interposed between the oxygen supply (20) and the at least one oxygen mask (12). The pressure reducer (26) comprises a housing (28), a piston (30), which is axially movable within the housing (28), a high pressure inlet (32), which is provided on a high pressure side of the housing (28) and which is coupled to the oxygen supply (20), a pressure reducing gas flow path (34), connecting the high pressure inlet and (32) an axial gas flow channel (36) within the piston (30), a reduced pressure outlet (38), which is provided on a reduced pressure side of the housing (28) and to which the axial gas flow channel (36) opens, and a pressure control chamber (40), which extends radially from the reduced pressure outlet (38) and which is interposed between the housing (28) and a reduced pressure end face (46) of the piston (30).

## Description

The present invention is in the field of aircraft equipment. The present invention is in particular in the field of oxygen supply equipment for aircraft. Further in particular, the present invention is in the field of aircraft oxygen supply systems in passenger aircraft or military aircraft and aircraft comprising such oxygen supply systems.

Modern aircraft comprising a pressurized cabin are equipped with emergency oxygen masks, which are deployed for the passengers and for the crew in case of a loss of cabin pressure during flight. The oxygen masks may be part of self-sustained aircraft emergency oxygen supply systems, including oxygen sources that provide oxygen gas to oxygen masks for the passengers / crew, in case cabin pressure is lost.

In case of pressure loss within a passenger cabin of an aircraft, the oxygen masks drop from the ceiling above the passenger seats. The oxygen masks are often tied to lanyards, which extend between the oxygen masks and the ceiling for holding the oxygen masks at positions, which are in sight of the passengers and which can be reached easily by the passengers for grabbing the oxygen mask.

Many modern aircraft emergency oxygen supply systems have a two-stage set-up for providing suitable oxygen amounts to the passengers and/or crew. A high pressure oxygen supply is coupled to a pressure reducer, which reduces the pressure of the high pressure oxygen supply to a reduced pressure, which is also often referred to as the working pressure of the aircraft emergency oxygen supply system. The oxygen with the reduced pressure / working pressure is used to feed oxygen to the passengers / crew. The supply of oxygen to the passengers / crew may take place via a continuous flow of oxygen towards the oxygen masks or via the provision of oxygen pulses to the oxygen masks or via a time-variant oxygen flow to the oxygen masks, intended to match an inhalation profile. The pressure reducer is commonly designed for providing a suitable level of the reduced pressure / working pressure.

One common operational limit of such a pressure reducer is the lock up pressure at zero, or near zero, mass flows. Another common operational limit of such a pressure reducer is that the outlet pressure decreases with higher mass flows. This often limits the operational range for higher mass flows and the efficiency of the used high pressure oxygen supply.

It would therefore be beneficial to provide an aircraft oxygen supply system that comprises a pressure reducer, which allows for improved outlet pressure stability at higher mass flows.

Exemplary embodiments of the invention include an aircraft oxygen supply system, comprising at least one oxygen mask, an oxygen supply, and a pressure reducer, interposed between the oxygen supply and the at least one oxygen mask, wherein the pressure reducer comprises a housing, a piston, which is axially movable within the housing, a high pressure inlet, which is provided on a high pressure side of the housing and which is coupled to the oxygen supply, a pressure reducing gas flow path, connecting the high pressure inlet and an axial gas flow channel within the piston, a reduced pressure outlet, which is provided on a reduced pressure side of the housing and to which the axial gas flow channel opens, and a pressure control chamber, which extends radially from the reduced pressure outlet and which is interposed between the housing and a reduced pressure end face of the piston.

Exemplary embodiments of the invention allow for the provision of an aircraft oxygen supply system, whose pressure reducer has an improved outlet pressure stability at higher mass flows, as compared to previous approaches. With the axial gas flow path within the piston opening to the reduced pressure outlet and with the pressure control chamber extending radially from the reduced pressure outlet, a set-up is provided where the axial gas flow path, the reduced pressure outlet, and the pressure control chamber cooperate to control the piston of the pressure reducer and to condition the outlet pressure in a beneficial manner. It has been found that the given set-up provides for an effective piston control and that the interplay between the axial gas flow path, the reduced pressure outlet, and the pressure control chamber, together with the effectively controlled piston, provides for oxygen flow effects that keep the pressure at the reduced pressure outlet comparably stable at higher mass flows. In contrast to an expected decrease in the pressure at the reduced pressure outlet at higher mass flows, which can be observed in previous approaches, the pressure at the reduced pressure outlet stays comparably high and may even slightly increase with the set-up as described herein. In particular, the given set-up may avoid a decrease in the outlet pressure and may even provide a positive pressure gradient of the outlet pressure for increases in the mass flow that would lead to detrimental pressure drops in the outlet pressure in previous approaches.

Without wanting to be bound by theory, the comparably stable and/or increasing outlet pressure may be linked to the following considerations / mechanisms at higher mass flow rates. With the configuration of the pressure reducer, a lower pressure in the reduced pressure outlet, which is generated by a comparably high oxygen flow through the reduced pressure outlet, may lead to a pressure on the piston that is in turn lower than the pressure in the reduced pressure outlet. This effect increases with higher flows of oxygen and is understood to counteract the negative outlet pressure gradient that would be expected with increasing mass flows. The decreasing pressure on the piston enables the piston to open the pressure reducer somewhat more, which then creates a higher outlet pressure.

The additional opening action of the pressure reducer, which is a secondary, but important effect to the main pressure control function of the piston, is understood to be generated by the outlet flow itself and increases with higher flows. Without wanting to be bound by theory, the described effect may be caused by gas flow turbulences, which may occur in the pressure control chamber, in particular at the interface of the pressure control chamber, the axial gas flow channel, and the reduced pressure outlet. The described effect may be linked to and may be adapted by the design of the different cross-sectional extensions of the components of the pressure reducer.

A controlled application of the above described effect may contribute to smaller variations of the pressure reducer performance. Since the described effect of the pressure reducer works at all temperatures that are expected in an aircraft environment, it may enable the system design of the aircraft oxygen supply system to have lower tolerances regarding the pressure reducer outlet pressure and/or smaller variations in the overall pressure behavior and/or less active control mechanisms for the pressure and/or less safety features. Further, downstream applications within the aircraft oxygen supply system, such as active oxygen supply controls and/or valves towards the oxygen masks, may be designed with less inlet pressure compensating elements.

In an embodiment, the housing of the pressure reducer comprises a piston stop surface for the reduced pressure end face of the piston, and the pressure control chamber of the pressure reducer comprises a recess in the housing with respect to the piston stop surface. Together, the piston stop surface and the recess may ensure that the gas in the pressure control chamber can act on the piston, even in case the piston is fully moved towards the reduced pressure side of the pressure reducer, i.e. even if the piston abuts the piston stop surface. The piston stop surface and the recess may provide for a stepped geometry of the housing on the reduced pressure side of the piston. The pressure control chamber may comprise the volume of the recess, irrespective of the position of the piston, and may be enlarged in volume, when the piston is axially moved towards the high pressure side of the housing. The piston stop surface is arranged on the reduced pressure side of the piston. The recess in the housing may be arranged radially inwards of the piston stop surface.

In an embodiment, the housing of the pressure reducer comprises a piston stop surface for the reduced pressure end face of the piston, and the pressure control chamber of the pressure reducer comprises a recess in the reduced pressure end face of the piston. Together, the housing and the recess in the reduced pressure end face of the piston may ensure that the gas in the pressure control chamber can act on the piston, even in case the piston is fully moved towards the reduced pressure side of the pressure reducer, i.e. even if the piston abuts the piston stop surface. The recess in the reduced pressure end face of the piston may provide for a stepped geometry of the pressure end face of the piston, i.e. for a stepped geometry on the reduced pressure side of the piston, wherein the more extended part of the stepped geometry abuts the piston stop surface of the housing, when the piston is fully moved towards the reduced pressure side of the pressure reducer, and wherein the less extended part of the stepped geometry does not abut the housing, even when the piston is fully moved towards the reduced pressure side of the pressure reducer. The pressure control chamber may comprise the volume of the recess, irrespective of the position of the piston, and may be enlarged in volume, when the piston is axially moved towards the high pressure side of the housing. The recess in the reduced pressure end face of the piston may be arranged radially inwards of the piston stop surface. The recess in the reduced pressure end face of the piston may be provided in addition to or as an alternative to the recess in the housing discussed above. The pressure control chamber may comprise one of those two recesses or may comprise both of those recesses.

In an embodiment, the piston of the pressure reducer may comprise a cavity in the reduced pressure end face of the piston, and the axial gas flow channel may open into the said cavity. The reduced pressure end face of the piston may be a substantially flat surface, with the exception of said cavity. The said cavity may be seen as a deep recess in the reduced pressure end face of the piston. The cavity is an additional volume, i.e. a volume in addition to the axial gas flow channel, the reduced pressure outlet, and the pressure control chamber, where gas flow effects may take place on the reduced pressure side of the pressure reducer. In particular, the cavity is an additional volume where turbulences may be created and/or controlled, in order to contribute to and/or enhance the above described effects for maintaining a comparably stable outlet pressure at higher oxygen flows. The cavity may be provided in embodiments where there is no recess in the reduced pressure end face of the piston, as discussed above, or may be provided in addition to the recess in the reduced pressure end face of the piston, as discussed above. As compared to said recess in the reduced pressure end face of the piston, if present, and as compared to above discussed recess in the housing, if present, the cavity may have a smaller radial extension and a larger axial extension.

In an embodiment, an end portion of the axial gas flow channel is formed by a collar in the cavity. In this way, the end portion of the axial gas flow channel has a particularly exposed location on the reduced pressure side of the pressure reducer. The end portion of the axial gas flow channel is surrounded by empty space on many sides. In particular, the end portion of the axial gas flow channel is surrounded by the reduced pressure outlet, the pressure control chamber, and the cavity and may therefore have a particularly strong effect in creating turbulences on the reduced pressure side of the pressure reducer. The end portion of the axial gas flow channel may thus be particularly effective in contributing to the comparably stable outlet pressure at the reduced pressure outlet.

In an embodiment, at least one of the high pressure inlet, the axial gas flow channel, the pressure control chamber, and the reduced pressure outlet is cylindrical. The cavity may also be cylindrical, with the exception of the collar. Around the collar, the cavity may be designed as hollow cylindrical. With the above mentioned entities being cylindrical / hollow cylindrical, a particularly well-behaved set-up may be achieved. In particular, the above described flow effects may be made use of all around the respective entities. It is also possible that one or some or all of the mentioned entities have different, i.e. non-circular, cross-sections, such as elliptical, rectangular, or quadratic cross-sections.

In an embodiment, one or more or all of above described components may be substantially rotationally symmetrical. In particular, the pressure reducer may be substantially rotationally symmetrical, at least with respect to those components / elements that affect the oxygen flow therethrough. It is understood that those parts of the pressure reducer that are not relevant for the oxygen flow, such as the outer geometry of the housing, the housing support structure, etc., may be rotationally symmetrical or may be not rotationally symmetrical.

In an embodiment, the axial gas flow channel has a first cross-sectional extension, the pressure control chamber has a second cross-sectional extension, and the reduced pressure outlet has a third cross-sectional extension. The term cross-sectional extension refers to the diameters of the respective entities, when the respective entities are cylindrical. When the respective entities are not cylindrical, the expression cross-sectional extension may refer to the direction of largest extension of the respective entity in the cross-sectional plane, e.g. to the diagonal of a rectangular cross-section. The cross-sectional plane, in which the cross-sectional extension is measured, may be a plane orthogonal to the main oxygen flow direction through the pressure reducer. In particular, the cross-sectional plane, in which the cross-sectional extension is measured, may be orthogonal to the direction of axial movement of the piston.

In an embodiment, the third cross-sectional extension is between 2 times and 10 times, in particular between 3 times and 5 times, as large as the first cross-sectional extension. In this way, a comparably small cross-section of the axial gas flow channel opens to a significantly larger cross-section of the reduced pressure outlet. The significant and abrupt increase in cross-sectional extension may be highly effective in helping to create oxygen flow turbulences that contribute to the stable pressure conditioning at high oxygen flows.

In an embodiment, the second cross-sectional extension is between 2 times and 8 times, in particular between 3 times and 6 times, as large as the third cross-sectional extension. With these ratios between the second cross-sectional extension and the third cross-sectional extension, a particularly good trade-off between effectively controlling the piston and providing a suitable gas volume in the pressure control chamber for helping the stable pressure conditioning at high oxygen flows may be achieved.

In an embodiment, a radial extension of the pressure control chamber is between 30 times and 50 times as large as an axial extension of the pressure control chamber. The given ratio may be present, when the piston abuts the piston stop surface. In other words, the given ratio may be present when the pressure control chamber has its minimum volume. The comparably very small extension of the pressure control chamber in the axial direction of the pressure reducer has been found to be beneficial in helping the stable pressure conditioning at high oxygen flows. The radial extension of the pressure control chamber is the same as the second cross-sectional extension, referred to above.

In an embodiment, the cross-sectional extension of the cavity may be between 1 time and 2.5 times as large as the cross-sectional extension of the reduced pressure outlet, i.e. between 1 time and 2.5 times as large as the third cross-sectional extension, referred to above.

In an embodiment, the cross-sectional extension of the cavity may be between 2 times and 5 times as large as the axial extension of the cavity.

The above described dimensioning of the cavity has been found to be well-suited to contribute to the stable pressure conditioning at high oxygen flows.

In an embodiment, the reduced pressure outlet is tapered with respect to the pressure control chamber. Such a design may help in drafting oxygen from the pressure control chamber with the generated turbulences and may help in contributing to the stable pressure conditioning at high oxygen flows.

In an embodiment, the at least one oxygen mask is a plurality of oxygen masks. The aircraft oxygen supply system may in particular comprise two, three, four, five, six, seven, eight or more oxygen masks that are fed by the pressure reducer. As a plurality of oxygen mask are more likely to cause higher oxygen flows, the design of the pressure reducer, as described herein, is particularly beneficial in aircraft oxygen supply systems with multiple oxygen masks.

In an embodiment, the plurality of oxygen masks are a plurality of passenger oxygen masks. For example, in case the aircraft oxygen supply system is an aircraft emergency oxygen supply system and said aircraft emergency oxygen supply system is provided for three or four aircraft seats, i.e. for three or four passengers, the pressure reducer, as described herein, has been found to be particularly good in providing a stable outlet pressure, even when all oxygen masks are in use.

In an embodiment, the plurality of oxygen masks are a plurality of flight crew oxygen masks, in particular a plurality of pilot oxygen masks, or a plurality of military crew oxygen masks, in particular a plurality of paratrooper oxygen masks. Pilot oxygen masks may be designed for between 10 times and 30 times the oxygen flow of passenger oxygen masks. This is because pilots have high stress levels and consume much oxygen in emergency situations and/or because pilot oxygen masks are designed to provide ample oxygen supply, even in case of smoke in the cockpit. The pilot oxygen masks may be pilot oxygen masks for civilian or military aircraft. It is also possible that the pilot oxygen masks are worn during regular flight operations, such as in high altitude flights. In military applications, combatants, such as paratroopers / parachutists, may load up on oxygen / may reduce the nitrogen content in their blood via an increased oxygen supply, when on an aircraft and preparing for combat. Other members of the military crew of the aircraft may also require additional / concentrated oxygen during the mission. The aircraft oxygen supply system, as described herein, may be used for such military operations. When supplying oxygen to heavy oxygen consumers on board an aircraft, such as pilots, combatants, etc., the good pressure conditioning at high oxygen flows, as described herein, may be particularly beneficial.

An aircraft oxygen supply system comprising a plurality of passenger / crew oxygen masks, which are fed by a single pressure reducer, allows for an efficient use of the pressure reducer. In consequence, the costs of an aircraft oxygen supply system, comprising a given number of oxygen masks, may be reduced, as compared to a configuration in which an individual pressure reducer is provided for each oxygen mask and/or as compared to a configuration where other working pressure stabilizing means are employed.

In an embodiment, the aircraft oxygen supply system further comprises a controller configured to provide pulses of reduced pressure oxygen from the reduced pressure outlet of the pressure reducer to the at least one oxygen mask. The controller may in particular be configured to detect a breathing action by a wearer of an oxygen mask and to provide a pulse of reduced pressure oxygen to the oxygen mask in response to the detection of the breathing action. In other words, a breathing action by a wearer of an oxygen mask may trigger the provision of a pulse of reduced pressure oxygen from the aircraft oxygen supply system. Such a pulsed oxygen supply system may use the oxygen in a particularly efficient manner, thus contributing to a long oxygen provision time and/or to low oxygen amounts for a given oxygen provision time.

In an embodiment, the aircraft oxygen supply system further comprises a controller configured to provide a time-variant flow of reduced pressure oxygen from the reduced pressure outlet of the pressure reducer to the at least one oxygen mask. The controller may in particular be configured to detect a breathing action by a wearer of an oxygen mask and to provide a time-variant flow of reduced pressure oxygen. Said time-variant flow of reduced pressure oxygen may be configured to match an expected / anticipated / nominal inhalation profile by the wearer of the oxygen mask.

In an embodiment, the oxygen supply comprises an oxygen bottle, in particular an oxygen bottle filled with compressed oxygen, or an oxygen generator, in particular an oxygen generator comprising sodium chlorate and sodium monoxide, or a connection to central oxygen source.

In an embodiment, the aircraft oxygen supply system is an aircraft emergency oxygen supply system. Accordingly, the aircraft oxygen supply system may be configured to provide oxygen supply in an emergency flight condition. The emergency flight condition may be triggered by a pressure loss within an aircraft cabin or by another suitable trigger.

In an embodiment, the aircraft oxygen supply system is a passenger emergency oxygen supply system, in particular a passenger emergency oxygen supply system of a commercial aircraft. In another embodiment, the aircraft oxygen supply system is a crew emergency oxygen supply system, such as a pilot emergency oxygen supply system.

In an embodiment, the aircraft oxygen supply system is configured to provide oxygen supply in regular flight conditions. In a particular embodiment, the aircraft oxygen supply system is a flight crew oxygen supply system, such as a flight crew oxygen supply system for high altitude flights. It is also possible that the aircraft oxygen supply system is a military crew oxygen supply system, such as an oxygen supply system for a military flight crew or an oxygen supply system for military personnel to be deployed from the aircraft, e.g. paratroopers / parachutists.

In an embodiment, the aircraft oxygen supply system is arranged in a passenger service unit, in particular arranged in an overhead passenger service unit. Stated differently, exemplary embodiments of the invention include a passenger service unit, in particular an overhead passenger service unit, comprising an aircraft oxygen supply system in accordance with any of the embodiments described herein. The passenger service unit may be a passenger service unit of a commercial aircraft.

In an embodiment, the high pressure inlet comprises a receiving portion with a funnel-shaped outlet connected with an outlet portion of the high pressure inlet, wherein a cross-section of the outlet portion is smaller than a cross-section of the receiving portion, and the outlet portion is in fluid connection with the axial gas flow channel. The axial gas flow channel may have a similar cross-section as the outlet portion. The receiving portion and/or the outlet portion and/or the axial gas flow channel may be cylindrical.

A cross-section of the high pressure inlet, in particular of the receiving portion of the high pressure inlet, may be smaller than a cross-section of the reduced pressure outlet.

The pressure reducer may be located on an outlet side of the oxygen supply. The oxygen supply may comprise an oxygen bottle, in particular an oxygen bottle with compressed oxygen, or an oxygen generator or a connection to central oxygen source. The oxygen bottle and/or oxygen generator may be local, arranged in a passenger service unit, such as an overhead passenger service unit. The aircraft oxygen supply system may further comprise a controller coupled to the oxygen supply to start and, potentially, to stop the flow of oxygen from the oxygen supply.

The at least one oxygen mask may be configured to be worn by a wearer, such as by a pilot, by another crew member, by a combatant transported by the aircraft, or by a passenger within the aircraft. The aircraft oxygen supply system may be an oxygen supply system of a flight deck breathing system in the aircraft.

Exemplary embodiments of the invention also include an aircraft, such as an air plane or a helicopter, which comprises at least one aircraft oxygen supply system according to exemplary embodiments of the invention. The additional features, modifications and effects, as described above with respect to the aircraft oxygen supply system, apply to the aircraft in an analogous manner.

Further exemplary embodiments of the invention are described below with respect to the accompanying drawings, wherein:
Figure 1 shows an aircraft, in particular an air plane, in accordance with an exemplary embodiment of the invention in a schematic side view.
Figure 2 shows a perspective view of an aircraft oxygen supply system in accordance with an exemplary embodiment of the invention, with the oxygen masks of the aircraft oxygen supply system being shown in a deployed state.
Figure 3 shows a schematic block diagram of an aircraft oxygen supply system according to an exemplary embodiment of the invention.
Figure 4 shows a schematic, cross-sectional view of a pressure reducer of an aircraft oxygen supply system according to an exemplary embodiment of the invention.
Figure 5 shows four diagrams that illustrate the behavior of the outlet pressure of a pressure reducer of an aircraft oxygen supply system according to an exemplary embodiment of the invention for different flow rates, different temperatures, and different inlet pressures.

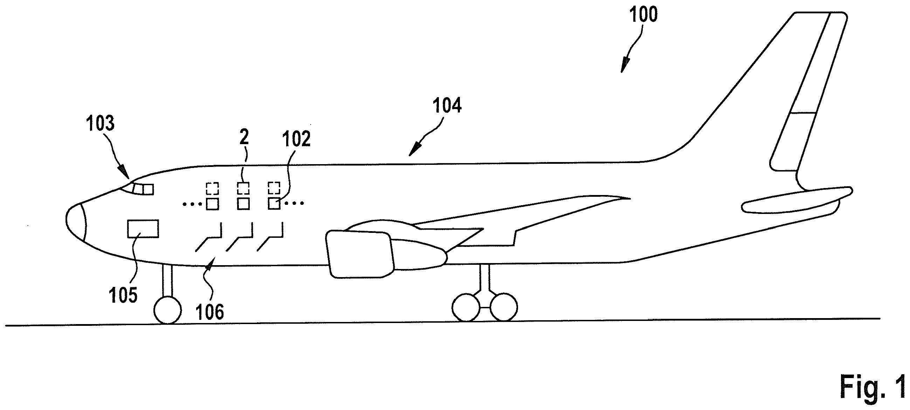

Figure 1 shows an aircraft 100, in particular an air plane, in accordance with an exemplary embodiment of the invention in a schematic side view. In the exemplary embodiment shown in Figure 1, the aircraft 100 is a large passenger air plane comprising a passenger cabin 104 housing a plurality of passenger seats 106. The aircraft 100 may be a commercial passenger air plane, a private air plane, a military aircraft, or a rotorcraft, such as a helicopter.

The aircraft 100 comprises a plurality of aircraft oxygen supply systems 2 according to exemplary embodiments of the invention. In particular, the aircraft 100 comprises a plurality of aircraft oxygen supply systems 2 according to exemplary embodiments of the invention, which are emergency oxygen supply systems for the passengers of the aircraft 100.

In an exemplary configuration, in which the aircraft 100 comprises six passenger seats 106 in every row, each row of passenger seats 106 may have two aircraft oxygen supply systems 2 associated therewith, one aircraft oxygen supply system 2 assigned to the passenger seats 106 on the left side of a center aisle and one aircraft oxygen supply system 2 assigned to the passenger seats 106 on the right side of the center aisle, respectively.

For the exemplary embodiment of each row of passenger seats 106 having six seats, every aircraft oxygen supply system 2 may have one oxygen supply 20 and three oxygen masks 12, coupled to the oxygen supply 20. Such a set-up is schematically illustrated in Figure 1 via three exemplary passenger windows 102, each being associated with a row of passenger seats 106, and via three exemplary aircraft oxygen supply systems 2, depicted in phantom due to their arrangement within the aircraft 100.

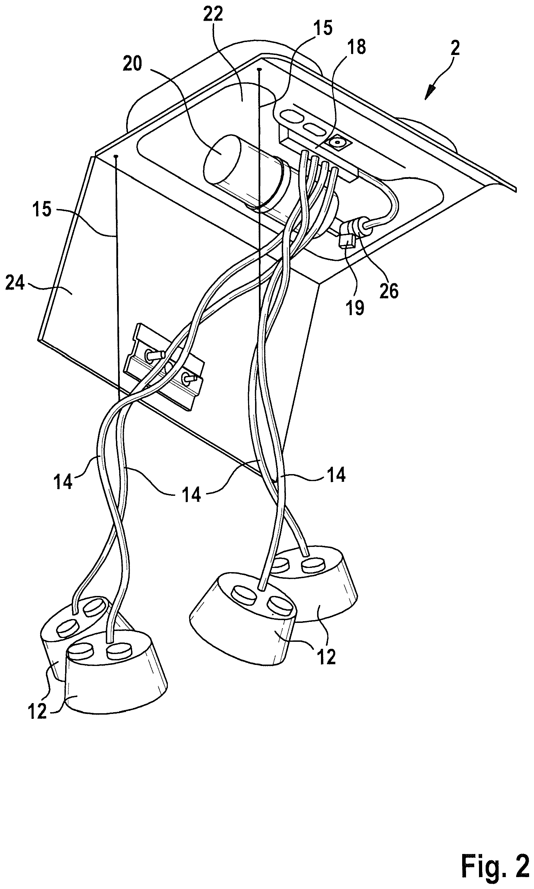

Figure 2 depicts an aircraft oxygen supply system 2 in accordance with an exemplary embodiment of the invention, as it may be installed in the passenger cabin 104 of an aircraft 100, in a perspective view. In the exemplary embodiment of Figure 2, the aircraft oxygen supply system 2 is an emergency oxygen supply system for passengers of the aircraft 100. The aircraft oxygen supply system 2 depicted in Figure 2 comprises an oxygen supply 20 and four passenger oxygen masks 12. More or less than four passenger oxygen masks 12, such as two, three, five, six, seven, eight or more passenger oxygen masks, may be provided. Each oxygen mask 12 is fluidly coupled with the oxygen source 20 by an oxygen hose 14, allowing the oxygen supply 20 to supply gaseous oxygen via the oxygen hose 14 to the respective oxygen mask 12.

During normal operation of the aircraft 100, the oxygen masks 12 are stored within a compartment 22, and a movable door 24 of the aircraft oxygen supply system 2 is in a closed position, in which it covers the oxygen supply 20 and prevents the oxygen masks 12 from dropping out of the compartment 22.

In case of a pressure loss within the passenger cabin 104, the movable door 24 opens, allowing the oxygen masks 12 to drop out of the compartment 22, so that a passenger sitting below the compartment 22 may grab one of the oxygen masks 12 and apply it to his/her face. The oxygen masks 12 may be held by mechanical links 15, such as cords or wires, in front of the passengers. The oxygen supply 20 may be equipped with a starter 19, which may be a mechanical starter or a pyroelectric starter. Upon activation via an according signal, the starter 19 may start the release of oxygen from the oxygen supply 20, such as via breaking a seal of the oxygen supply 20.

The aircraft oxygen supply system 2 comprises a pressure reducer 26 and a controller 18, which is configured to provide pulses of reduced pressure oxygen from the reduced pressure outlet of the pressure reducer 26 to the oxygen masks 12. The pressure reducer 26 is located on an outlet side of the oxygen supply 20. It is interposed between the oxygen supply 20 and the oxygen masks 12.

In an embodiment, the supply of oxygen from the oxygen supply 20 to an oxygen mask 12 is started, after a first breath has been taken by the passenger and said first breath has been detected by a breath sensor (not shown in Figure 2), which is arranged along the flow path between the oxygen supply 20 and the respective oxygen mask 12.

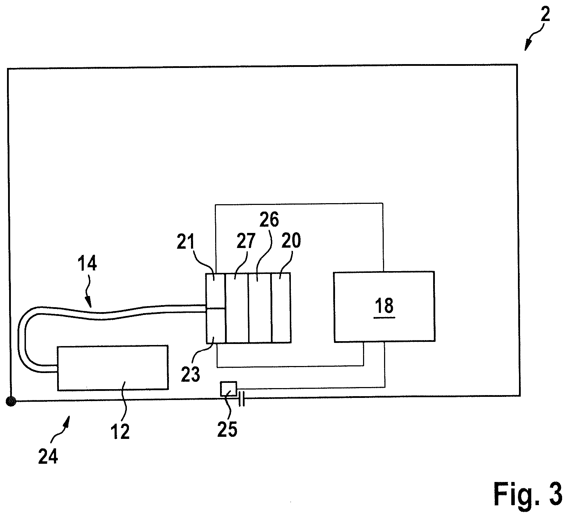

Figure 3 depicts a schematic block diagram of an aircraft oxygen supply system 2 in accordance with an exemplary embodiment of the invention.

For simplicity of illustration, only a single oxygen mask 12, which is fluidly coupled to an oxygen supply 20 by means of an oxygen hose 14, is depicted in Figure 3. In the exemplary embodiment of Figure 3, the oxygen supply 20 is connected with a pressure reducer 26 and a working oxygen reservoir 27. With the pressure reducer 26, the high pressure of the oxygen from the oxygen supply 20, which may be an oxygen bottle or an oxygen generator, is reduced to a working pressure, also referred to as reduced pressure herein. Via an oxygen control device 23, which may in particular be a controlled valve, the oxygen from the working oxygen reservoir 27 is supplied to the oxygen hose 14.

It is understood that an aircraft oxygen supply system 2, as it is depicted in Figure 3, may comprise more than one oxygen mask 12. A plurality of oxygen masks 12 may be fluidly coupled to a common oxygen supply 20, as it is shown in Figure 2. When the plurality of oxygen masks 12 are simultaneously in use, a large mass flow of oxygen, also referred to as a high flow rate of oxygen / a high oxygen flow, may result. Such high flow rates draft comparably large amounts of oxygen from the working oxygen reservoir 27 and may threaten to lead to an undesired decrease of the working pressure. The pressure reducer, as described herein, may counteract such decrease in working pressure.

The aircraft oxygen supply system 2 of Figure 3 further comprises a controller 18, which is configured for controlling the operation of the aircraft oxygen supply system 2.

The controller 18 is in particular configured for controlling an actuator 25, which is provided for unlocking and/or opening the movable door 24 of the aircraft oxygen supply system 2, in order to provide passengers with access to the at least one oxygen mask 12 of the aircraft oxygen supply system 2.

The controller 18 is further configured for controlling the supply of oxygen from the oxygen supply 20 to the oxygen mask 12. In particular, the controller 18 is configured for controlling the oxygen control device 23 for effecting a controlled supply of oxygen to the oxygen mask 12. In case the aircraft oxygen supply system 2 comprises a plurality of oxygen masks 12, an individual oxygen control device 23 may be provided for each oxygen mask 12, respectively, so that the controller 18 can control the oxygen flow to the passengers wearing the oxygen masks 12 individually for each oxygen mask 12.

The aircraft oxygen supply system 2 may comprise at least one breath sensor 21, which is configured for detecting the breaths of a passenger, who is wearing the oxygen mask 12. In case the aircraft oxygen supply system 2 comprises a plurality of oxygen masks 12, an individual breath sensor 21 may be provided for each oxygen mask 12, respectively, so that the controller 18 receives information about the breaths of the passengers wearing the oxygen masks 12 individually for each oxygen mask 12.

In response to detecting a breath by a passenger, the controller 18 may effect an oxygen pulse to the associated oxygen mask 12.

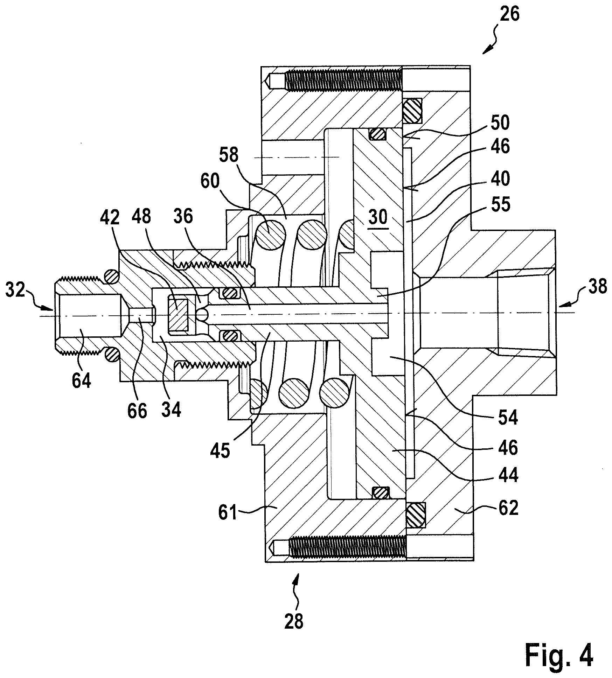

Figure 4 depicts a pressure reducer 26 of an aircraft oxygen supply system according to an exemplary embodiment of the present invention. As shown, the pressure reducer 26 includes a housing 28, a piston 30, which is axially movable within the housing 28, a high pressure inlet 32, which is provided on a high pressure side of the housing 28 and which is coupled to the oxygen supply, and a reduced pressure outlet 38, which is provided on a reduced pressure side of the housing 28. In the depicted viewing direction of Figure 4, the high pressure side of the pressure reducer 26 is on the left hand side and the reduced pressure side of the pressure reducer 26 is on the right hand side. The piston 30 is movable in the left-right direction in the housing 28.

The piston 30 comprises an axial gas flow channel 36. A pressure reducing gas flow path 34 connects the high pressure inlet 32 and the axial gas flow channel 36 within the piston 30. On the reduced pressure side, the axial gas flow channel 36 opens to the reduced pressure outlet 38.

The pressure reducer 26 further comprises a pressure control chamber 40, which extends radially from the reduced pressure outlet 38 and which is interposed between the housing 28 and a reduced pressure end face 46 of the piston 30.

The piston 30 includes a generally cylindrical piston base 42, substantially concentrically aligned with a piston head 44. The piston head 44 is substantially rotationally symmetrical and has an annular reduced pressure end face 46. Other shapes may be used, as desired. A shaft portion 45 of the piston 30 is arranged between the piston base 42 and the piston head 44. The axial gas flow channel 36 extends through the shaft portion 45 of the piston 30.

To direct oxygen from the high pressure inlet 32 to the reduced pressure outlet 38 with a controlled reduction in pressure, the piston 30 includes the pressure reducing gas flow path 34. The pressure reducing gas flow path 34 extends from the high pressure inlet 32, around the piston base, through at least one cross-bore 48 within the piston base 42, and into the axial gas flow channel 36. The axial gas flow channel 36 opens to the reduced pressure outlet 38. It is understood that the piston 30 may include any number of cross-bores 48. It is further understood that the pressure reducing gas flow path 34, including the at least one cross-bore 48, may have any shape or size, as suitable for a desired pressure drop.

The housing 28 of the pressure reducer 26 comprises a piston stop surface 50 for the reduced pressure end face 46 of the piston 30. When moved all the way to the reduced pressure side of the pressure reducer 26, i.e. when moved all the way to the right in the viewing direction of Figure 4, the reduced pressure end face 46 abuts the piston stop surface 50. In the depicted exemplary embodiment, the pressure control chamber 40 of the pressure reducer 26 is formed by a recess in the housing 28. This recess is recessed with respect to the piston stop surface 50. The piston stop surface 50 is arranged around the recess in an annular manner. The pressure control chamber 40 is formed between the housing 28 and the reduced pressure end face 46 of the piston 30.

It is also possible that the there is no recess in the housing 28 and that the pressure control chamber 40 comprises a recess in the reduced pressure end face 46 of the piston 30. The recess in the reduced pressure end face 46 of the piston 30 may have the same or similar axial and radial dimensions as the recess in the housing 28 depicted in Figure 4. It is also possible that both the housing 28 and the reduced pressure end face 46 of the piston have recesses, and that the pressure control chamber 40 comprises both of said recesses.

Turning back to the embodiment depicted in Figure 4, the piston 30 of the pressure reducer 26 further comprises a cavity 54 in the reduced pressure end face 46. The cavity 54 is formed by a comparably deep recess with respect to the reduced pressure end face 46. The axial gas flow channel 36 opens into the cavity 54. The end portion of the axial gas flow channel 36 is formed by a collar 55 in the cavity 54.

The housing 28 further comprises a spring cavity 58. A spring 60 is arranged in the spring cavity 58 for biasing the piston 30 towards the reduced pressure side of the pressure reducer 26. As a non-limiting example, the spring 60 is a compression spring, having a desired size and spring constant. The spring 60 is arranged around the shaft portion 45 of the piston 30. Other suitable springs or biasing elements may be used, as desired. As shown, the spring cavity 58 is sealed with respect to the high pressure inlet 32 and the reduced pressure outlet 38 to effectively control the flow of fluid through the pressure reducer 26.

The housing 28 has a two-component structure in the exemplary embodiment of Figure 4. The housing 28 comprises a main body 61 and an end cap 62. The end cap 62 is coupled to the main body 61, thereby enclosing the piston 30 and forming the pressure control chamber 40 for piston control. It is understood that the housing 28 may include additional elements formed in or disposed on the high pressure inlet 32 of the housing 28 for connecting the pressure reducer 26 to an oxygen supply.

The axial gas flow channel 36 has a first cross-sectional extension, the pressure control chamber 40 has a second cross-sectional extension, and the reduced pressure outlet 38 has a third cross-sectional extension. As shown in Figure 4, the third cross-sectional extension is about 4 times as large as the first cross-sectional extension and the second cross-sectional extension is about 4,5 times as large as the third cross-sectional extension. A radial extension of the pressure control chamber is 45 times as large as an axial extension of the pressure control chamber, when the reduced pressure end face 46 of the piston 30 abuts the piston stop surface 50. The reduced pressure outlet 38 is tapered with respect to the pressure control chamber 40.

In the exemplary embodiment of Figure 4, the first cross-sectional extension is between 2 mm and 3 mm, the second cross-sectional extension is between 30 mm and 50 mm, and the third cross-sectional extension is between 5 mm and 10 mm. While the above mentioned ratios and dimensions have been found to provide a good performance of the pressure reducer, it is understood that other ratios and dimensions are possible as well.

The high pressure inlet 32 comprises a receiving portion 64 with a funnel-shaped outlet connected with an outlet portion 66, wherein a cross-sectional extension of the outlet portion 66 is smaller than a cross-sectional extension of the receiving portion 64. The outlet portion 66 is connected with the axial gas flow channel 36 via the pressure reducing gas flow path 34. The axial gas flow channel 36 may have a similar cross-sectional extension as the receiving portion 64. The receiving portion 64 and/or the outlet portion 66 and/or the axial gas flow channel 36 are cylindrical. The cross-sectional extension of the receiving portion 64 of the high pressure inlet 32 is smaller than the cross-sectional extension of the reduced pressure outlet 38.

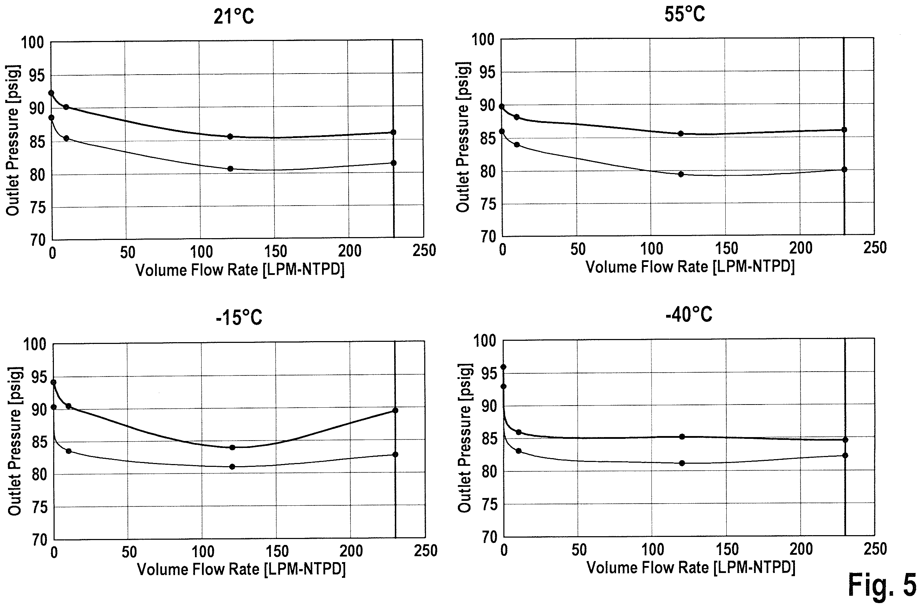

Figure 5 shows four diagrams that illustrate the behavior of the outlet pressure of a pressure reducer of an aircraft oxygen supply system according to an exemplary embodiment of the invention. The pressure reducer, underlying the illustrated behavior, may be the pressure reducer of the exemplary embodiment of Figure 4. The four diagrams show the outlet pressure of the pressure reducer on the y-axis as a function of the oxygen flow rate on the x-axis. The four diagrams illustrate the behavior of the pressure reducer at four different temperatures, namely 21°C, 55°C, -15°C and -40°C. For each of the four different temperatures, the respective diagram illustrates the behavior for two different inlet pressures.

It can be seen that, for all four different temperatures and for all different inlet pressures, the outlet pressure is quite stable for an increase in the oxygen flow rate. In particular, the outlet pressure is quite stable up until an oxygen flow rate of 220 liters per minute, which is a common requirement / design goal for aircraft oxygen supply systems at normal temperature and pressure. Further in particular, for various of the depicted temperature and inlet pressure scenarios, the outlet pressure even increases from an oxygen flow rate of about 120 liters per minute to an oxygen flow rate of about 220 liters per minute. In previous approaches with a different pressure reducer geometry, the outlet pressure showed a considerable negative gradient at higher oxygen flow rates, making such pressure reducers not ideally suited for aviation applications. With the pressure reducer set-up, as described herein, the beneficial behavior, as illustrated in Figure 5 can be achieved. From Figure 5, it can be seen that a collapse of the outlet pressure can be prevented for all given temperatures and all given inlet pressures. While the collapse of the outlet pressure will still occur at even higher flow rates, as it did occur in previous approaches, the outlet pressure may show no or less of a negative gradient before the collapse, as compared to previous approaches. The limitations of the operational range, as had been associated with said negative gradient of the outlet pressure in previous approaches, may be eased or overcome. The described effect may work at all applicable temperatures for aviation applications and may work for a wide range of inlet pressures. As discussed above, in some cases, the outlet pressure may even increase again above a certain volume flow rate, see i.e. graphs at 21 °C and -15°C, which is contrary to the behaviour as expected from pressure reducers in accordance with previous approaches.

While the above description of the exemplary embodiments of the invention, as depicted in the Figures, mainly relates to aircraft emergency oxygen supply systems for passengers, it is understood that the described aircraft oxygen supply systems may be used differently / may be configured for different applications. As laid out above, aircraft oxygen supply systems in accordance with exemplary embodiments of the invention may also be flight crew emergency oxygen supply systems, flight crew oxygen supply systems for regular flight conditions, e.g. for high altitude flights, oxygen supply systems for military personnel to be deployed from the aircraft, e.g. paratroopers / parachutists, etc.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Aircraft oxygen supply system (2), comprising:
at least one oxygen mask (12),
an oxygen supply (20), and
a pressure reducer (26), interposed between the oxygen supply (20) and the at least one oxygen mask (12),
wherein the pressure reducer (26) comprises:
a housing (28),
a piston (30), which is axially movable within the housing (28),
a high pressure inlet (32), which is provided on a high pressure side of the housing (28) and which is coupled to the oxygen supply (20),
a pressure reducing gas flow path (34), connecting the high pressure inlet (32) and an axial gas flow channel (36) within the piston (30),
a reduced pressure outlet (38), which is provided on a reduced pressure side of the housing (28) and to which the axial gas flow channel (36) opens, and
a pressure control chamber (40), which extends radially from the reduced pressure outlet (38) and which is interposed between the housing (28) and a reduced pressure end face (46) of the piston (30).

2. Aircraft oxygen supply system (2) according to claim 1,
wherein the housing (28) of the pressure reducer (26) comprises a piston stop surface (50) for the reduced pressure end face (46) of the piston (30), and
wherein the pressure control chamber (40) of the pressure reducer (26) comprises a recess in the housing (28) with respect to the piston stop surface (50) and/or wherein the pressure control chamber (40) of the pressure reducer (26) comprises a recess in the reduced pressure end face (46) of the piston (30).

3. Aircraft oxygen supply system (2) according to claim 1 or claim 2, wherein the piston (30) of the pressure reducer (26) comprises a cavity (54) in the reduced pressure end face (46), and wherein the axial gas flow channel (36) opens into the cavity (54).

4. Aircraft oxygen supply system (2) according to claim 3, wherein an end portion of the axial gas flow channel (36) is formed by a collar (55) in the cavity (54).

5. Aircraft oxygen supply system (2) according to any of the preceding claims, wherein at least one of the high pressure inlet (32), the axial gas flow channel (36), the pressure control chamber (40), and the reduced pressure outlet (38) is cylindrical.

6. Aircraft oxygen supply system (2) according to any of the preceding claims, wherein the axial gas flow channel (36) has a first cross-sectional extension, wherein the pressure control chamber (40) has a second cross-sectional extension, and wherein the reduced pressure outlet (38) has a third cross-sectional extension.

7. Aircraft oxygen supply system (2) according to claim 6, wherein the third cross-sectional extension is between 2 times and 10 times, in particular between 3 times and 5 times, as large as the first cross-sectional extension.

8. Aircraft oxygen supply system (2) according to claim 6 or claim 7, wherein the second cross-sectional extension is between 2 times and 8 times, in particular between 3 times and 6 times, as large as the third cross-sectional extension.

9. Aircraft oxygen supply system (2) according to any of the preceding claims, wherein a radial extension of the pressure control chamber (40) is between 30 times and 50 times as large as an axial extension of the pressure control chamber (40).

10. Aircraft oxygen supply system (2) according to any of the preceding claims, wherein the reduced pressure outlet (38) is tapered with respect to the pressure control chamber (40).

11. Aircraft oxygen supply system (2) according to any of the preceding claims, wherein the at least one oxygen mask (12) is a plurality of oxygen masks (12).

12. Aircraft oxygen supply system (2) according to any of the preceding claims, further comprising a controller (18) configured to provide pulses of reduced pressure oxygen from the reduced pressure outlet (38) of the pressure reducer (26) to the at least one oxygen mask (12).

13. Aircraft oxygen supply system (2) according to any of the preceding claims, wherein the oxygen supply (20) comprises an oxygen bottle, in particular an oxygen bottle filled with compressed oxygen, or an oxygen generator or a connection to a central oxygen source.

14. Aircraft oxygen supply system (2) according to any of the preceding claims,
wherein the aircraft oxygen supply system (2) is an aircraft emergency oxygen supply system;
and/or
wherein the aircraft oxygen supply system (2) is arranged in a passenger service unit, in particular arranged in an overhead passenger service unit.

15. Aircraft (100), such as an air plane or a helicopter, comprising at least one aircraft oxygen supply system (2) in accordance with any of the preceding claims.
